# EUROPÄISCHE PATENTSCHRIFT

(11) **EP 0 830 518 B1**
(45) Veröffentlichungstag und Bekanntmachung des Hinweises auf die Patenterteilung: **11.08.1999**
(21) Anmeldenummer: 96918639.4
(22) Anmeldetag: 29.05.1996
(51) Int. Cl.: F16D 65/09

(54) **TROMMELBREMSE**
DRUM BRAKE
FREIN A TAMBOUR

(30) Priorität: 03.06.1995 DE 19520440
(43) Veröffentlichungstag der Anmeldung: 25.03.1998
(73) Patentinhaber: Continental Teves AG & Co. oHG, 60488 Frankfurt (DE)
(72) Erfinder: KEMPF, Dieter, D-60327 Frankfurt am Main (DE)
(86) Internationale Anmeldenummer: EP9602306
(87) Internationale Veröffentlichungsnummer: WO9639586

(56) Entgegenhaltungen:
- DE-A- 3 817 917
- DE-A- 4 020 539
- GB-A- 2 155 127
- GB-A- 2 198 199

## Beschreibung

Die Erfindung betrifft eine Trommelbremse für Kraftfahrzeuge gemäß dem Oberbegriff des Patentanspruchs 1.

Bei einer aus der US 3,850,266 bekannten Trommelbremse sind die Bremsbacken mittels achsparallele Stifte an einem auf der Fahrzeuginnenseite angeordneten Abdeckblech befestigt. Die Stifte ragen durch Löcher des Abdeckblechs und durch Löcher in den Stegen der Bremsbacken, wobei die Bremsbacken durch Federn axial vorgespannt und senkrecht zur Richtung der Stifte beweglich gehalten sind, um ein Zuspannen der Bremsbacken in radialer Richtung nach außen zum Andruck an die Bremstrommel zu ermöglichen. Außerdem erlaubt diese Befestigung auch eine Bewegung der Bremsbacken in Umfangsrichtung. Nachteilig kann bei der bekannten Trommelbremse an den Enden der Stifte, die das Abdeckblech berühren und dort beweglich sind, Korrosion auftreten, insbesondere wenn verschiedene Metalle aufeinander treffen, beispielsweise wenn die Stifte aus Eisen und das Abdeckblech aus Aluminium bestehen.

Darüber hinaus ist aus der GB-A-2 155 127 eine Trommelbremse mit mittels Stiften an einem Trägerblech befestigten Bremsbacken bekannt, wobei zwischen jedem Stift und dem Trägerblech ein hülsenartiges Anschlagelement angeordnet ist, durch das hindurch sich der Stift erstreckt. Das Anschlagelement dient dabei mit seinem hülsenartig sich in das Innere der Trommelbremse erstreckenden Abschnitt als mechanischer Anschlag für den Feststellbremshebel, wodurch der Schwenkbereich des Feststellbremshebels einseitig begrenzt wird. Als nachteilig bei einer derartigen Anordnung erweist sich die in Einzelfällen unzureichende Befestigung bzw. Positionierung der Stifte am Trägerblech. Insbeondere bei Anlage des Feststellbremshebels unter Vorspannung am Anschlagelement, können sowohl das Anschlagelement als auch der Stift aus ihrer vorgesehenen Position verschoben werden, was die erforderliche Bewegungsfreiheit der Bremsbacken einschränken kann.

Aufgabe der Erfindung ist es, eine bekannte Trommelbremse hinsichtlich der Befestigung der Stifte am Abdeckblech zu verbessern, so daß insbesondere die durch Korrosion bedingten Nachteile vermieden werden.

Die Lösung der Aufgabe ergibt sich aus dem kennzeichnenden Teil des Patentanspruchs 1. Im Prinzip besteht die Lösung darin, ein Kunststoffteil zwischen Abdeckblech und Stiften anzuordnen, das den direkten metallischen Kontakt verhindert und aufgrund seiner Formgebung optimal für die Befestigung der Stifte geeignet ist. Die erfindungsgemäße Anordnung hat den Vorteil, daß elektrochemisch bedingte Korrosion insbesondere zwischen verschiedenen Metallen aufgrund der isolierenden Wirkung der Kunststoffteile nicht mehr auftreten kann. Dabei ist die Öffnung des Kunststoffteiles mit einem länglichen Querschnitt versehen und der Stift weist ebenfalls einen Endabschnitt mit länglichem Querschnitt auf, der durch die Öffnung hindurchsteckbar und mit einer Drehung um 90° verriegelbar ist. Dadurch ist der Stift am Halteelement einrastbar und auf einfache Weise montierbar.

In einer bevorzugten Ausführungsform kann die sichere Befestigung des Stiftes noch verbessert werden, indem das Kunststoffteil U-förmige Ausnehmungen aufweist, in die der Endabschnitt des Stiftes einrastbar ist.

In einer Weiterbildung der Erfindung besitzen die Löcher des Abdeckblechs parallele Kanten, an denen seitliche Laschen des Kunststoffteils mit Rastnasen eingerastet sind. Diese Anordnung erlaubt eine Vormontage der Kunststoffteile am Abdeckblech. Die Kunststoffteile werden mit den Rastnasen am Abdeckblech auch dann schon sicher gehalten, wenn die Stifte noch nicht montiert sind. Auch beim Wechsel der Bremsbacken, wenn die Stifte gelöst werden müssen, können die Kunststoffteile nicht herausfallen und verlorengehen.

Ein weiterer Vorteil der Erfindung besteht darin, daß man die Kunststoffteile in Axialrichtung der Stifte verschieden dick ausgestalten kann, um so die wirksame Länge der Stifte in bezug auf die Bremsbacken zu verändern. Damit können insbesondere bei gleichbleibenden Federn veschieden starke Andruckkräfte für die Bremsbacken erzeugt werden.

Ein Ausführungsbeispiel der Erfindung wird nachfolgend anhand der Zeichnungen näher erläutert.

Es zeigen:

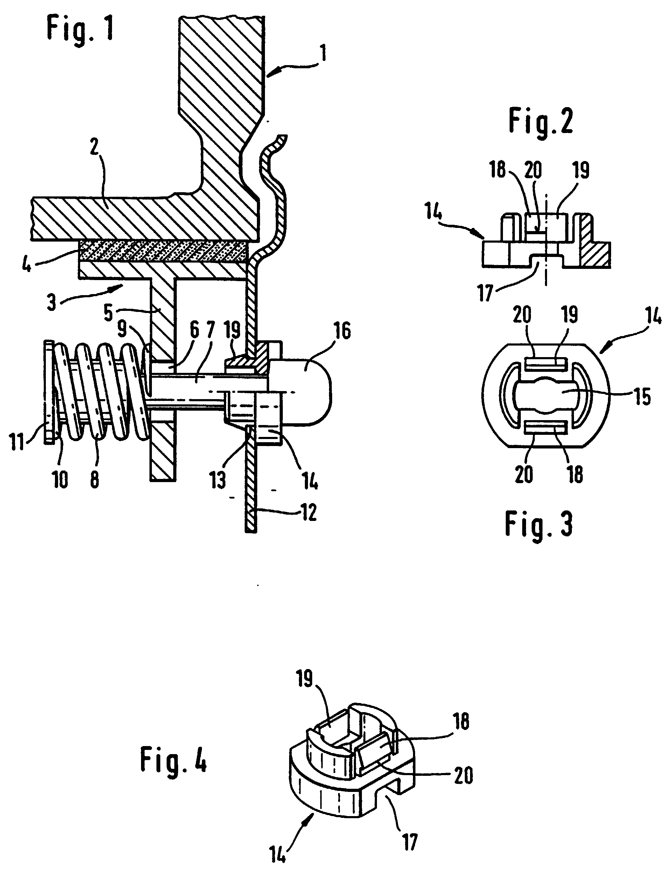

- Fig. 1: eine geschnittene Teilansicht durch eine erfindungsgemäße Trommelbremse,
- Fig. 2: eine teilweise geschnittene Seitenansicht eines erfindungsgemäßen Kunststoffteils,
- Fig. 3: eine Draufsicht auf dasselbe Kunststoffteil,
- Fig. 4: eine perspektivische Ansicht desselben Kunststoffteils.

Die dargestellte Trommelbremse besitzt einen Bremsenrotor 1 mit einem Trommelabschnitt 2, an den von innen Bremsbacken 3 andrückbar sind. Die Bremsbacken 3 besitzen einen Reibbelag 4 und einen Steg 5, der zur Befestigung der Bremsbacken 3 und zu deren Andruck an den Trommelabschnitt 2 dient. Zur Befestigung der Bremsbacken 3 weisen die Stege 5 jeweils ein Befestigungsloch 6 auf. Ein Stift 7 ragt durch das Befestigungsloch 6 und durch eine Feder 8, die auf der dem Fahrzeug abgewandten Seite des Steges 5 angeordnet ist. Die Feder 8 liegt mit ihrem einen Ende 9 am Steg 5 und mit ihrem anderen Ende 10 an einer Scheibe 11 an, an der der Stift 7 befestigt ist.

Auf der Fahrzeuginnenseite der Trommelbremse ist ein Abdeckblech 12 angeordnet, das zum Schutz der Bremsenteile vor Schmutz und Spritzwasser dient. Das Abdeckblech besitzt zwei Löcher 13, in denen jeweils ein Kunststoffteil 14 eingeklipst ist. Das Kunststoffteil 14 ist mit einer durchgehenden Öffnung 15 versehen, die einen länglichen Querschnitt aufweist und durch die der Stift 7 hindurchragt. Ein der Fahrzeuginnenseite zugewandter Endobschnitt 16 des Stiftes 7 besitzt ebenfalls einen länglichen Querschnitt, der durch die Öffnung 15 hindurchsteckbar und mittels einer Drehung um 90' verriegelbar ist. Das Kunststoffteil 14 ist weiterhin mit U-förmigen Ausnehmungen 17 versehen, in die der Endabschnitt 16 des Stiftes 7 einrastbar ist. Zur Befestigung des Kunststoffteils 14 am Abdeckblech 12 sind die Löcher 13 mit gegenüberliegend angeordneten parallelen Kanten versehen, an denen seitliche Laschen 18,19 des Kunststoffteils 14 einrastbar sind. Die Laschen 18,19 besitzen für diesen Zweck jeweils eine Rastnase 20, die hinter die Kanten des Lochs 13 greifen.

## Patentansprüche

1. Trommelbremse für Kraftfahrzeuge mit Bremsbacken (3), die mittels achsparalleler Stifte (7) an einem auf der Fahrzeuginnenseite angeordneten Abdeckblech (12) befestigt sind, wobei die Bremsbacken (3) durch Federn (8) axial vorgespannt und senkrecht zur Richtung der Stifte (7) beweglich gehalten sind, mit Halteelementen (14), die jeweils in einem Loch (13) des Abdeckbleches (12) angeordnet sind und eine durchgehende Öffnung (15) besitzen, durch die ein Stift (7) hindurchragt, dadurch **gekennzeichnet,** daß die zur Befestigung der Stifte (7) am Abdeckblech (12) in dieses eingeclipsten Halteelemente (14) als Kunststoffteile ausgeführt sind, daß die Öffnung (15) des Halteelementes (14) einen länglichen Querschnitt aufweist, daß der Stift (7) einen Endabschnitt (16) mit länglichem Querschnitt aufweist, der nach dem Durchstecken durch die Öffnung (15) mit einer Drehung um 90° verriegelbar ist und das der Stift (7) am Halteelement (14) eingerastet ist.

2. Trommelbremse nach Anspruch 1, dadurch **gekennzeichnet,** daß das Kunststoffteil U-förmge Ausnehmungen (17) aufweist, in die die Endabschnitte (16) der Stifte (7) einrastbar sind.

3. Trommelbremse nach einem der vorhergehenden Ansprüche, dadurch **gekennzeichnet,** daß die Löcher (13) des Abdeckblechs (12) parallele Kanten aufweisen, an denen seitliche Laschen, (18,19), des Kunststoffteils (15) mit Rastnasen (20) eingerastet sind.

## Claims

1. Drum brake for automotive vehicles including brake shoes (3) which are attached by paraxial pins (7) to a cover plate (12) arranged on the vehicle inside, and the brake shoes (3) are biassed axially by springs (8) and mounted movably in a direction vertical to the direction of the pins (7), and including retaining elements (14) respectively mounted in a hole (13) of the cover plate (12) and having a through-opening (15) through which a pin (7) projects,
**characterized** in that the retaining elements (14) which are snap-fitted into the cover plate (12) for the attachment of the pins (7) therein are configured as plastic parts, in that the opening (15) of the retaining element (14) has an elongated cross-section, in that the pin (7) includes an end portion (16) with an elongated cross-section which, after insertion through the opening (15), -can be locked by a rotation about 90°, and in that the pin (7) is in snap-type engagement with the retaining element (14).

2. Drum brake as claimed in claim 1,
**characterized** in that the plastic part has U-shaped recesses (17) for locking engagement with the end portions (16) of the pins (7).

3. Drum brake as claimed in any one of the preceding claims,
**characterized** in that the holes (13) of the cover plate (12) have parallel edges for locking engagement with detents (20) on the lateral lugs (18, 19) of the plastic part (14).

## Revendications

1. Frein à tambour pour véhicule automobile, comportant des mâchoires de frein (3) qui sont fixées au moyen de tiges (7), parallèles à l'axe, sur une tôle de recouvrement (12) disposée sur le côté intérieur du véhicule, les mâchoires de frein (3) étant soumises à une précontrainte axiale par des ressorts (8) et étant maintenues mobiles perpendiculairement à la direction des tiges (7), et comportant des éléments de maintien (14) qui sont disposés chacun dans un trou (13) de la tôle de recouvrement (12) et présentent une ouverture traversante (15) à travers laquelle une tige (7) fait saillie, caractérisé en ce que les éléments de maintien (14) agrafés dans la tôle de recouvrement (12) pour la fixation des tiges (7) sur cette tôle de recouvrement sont réalisés sous forme de pièces en matière plastique, en ce que l'ouverture (15) de l'élément de maintien (14) présente une section transversale allongée, en ce que la tige (7) comporte une section d'extrémité (16) qui présente une section transversale allongée et qu'il est possible de verrouiller par une rotation de 90° après lui avoir fait traverser l'ouverture (15) et en ce que la tige (7) est enclenchée sur l'élément de maintien (14).

2. Frein à tambour suivant la revendication 1, caractérisé en ce que la pièce en matière plastique présente des évidements (17) en U dans lesquels les sections d'extrémité (16) des tiges (7) sont enclenchables.

3. Frein à tambour suivant l'une des revendications précédentes, caractérisé en ce que les trous (13) de la tôle de recouvrement (12) présentent des bords parallèles sur lesquels des pattes latérales (18, 19) de la pièce en matière plastique (15) sont enclenchés par des talons d'enclenchement (20).
